# EUROPEAN PATENT SPECIFICATION

(11) **EP 4 119 527 B1**
(45) Date of publication and mention of the grant of the patent: **08.01.2025**
(21) Application number: 21185863.4
(22) Date of filing: 15.07.2021
(51) Int. Cl.: C04B 40/06, B65D 65/46, D03D 15/00, D04H 3/00, E04G 21/20, B65B 1/00, E04F 15/02

(54) **MORTAR POUCH FOR GLUING OR JOINTING TILES AND METHOD FOR MANUFACTURING THEREOF**
MÖRTELBEUTEL ZUM VERKLEBEN ODER VERBINDEN VON FLIESEN UND VERFAHREN ZUR HERSTELLUNG DAVON
POCHE DE MORTIER POUR COLLER OU JOINDRE DES CARREAUX ET SON PROCÉDÉ DE FABRICATION

(43) Date of publication of application: 18.01.2023
(73) Proprietor: Saint-Gobain Weber France, 94370 Sucy en Brie (FR)
(72) Inventor: LANA, Awad, 08005 Barcelona (ES); SHYAM, Zonca, 08005 Barcelona (ES); DUBOR Alexandre, 08005 Barcelona (ES); LEIVA MUNOZ Raul, 08110 Barcelona (ES)
(74) Representative: Saint-Gobain Recherche

(56) References cited:
- EP-A1- 3 441 545
- WO-A1-2004/009514
- DE-A1- 3 327 059
- DE-U1- 29 803 285
- JP-B2- 2 912 786
- US-A1- 2004 109 384
- US-A1- 2019 194 079

## Description

### Technical field

The invention pertains to mortar pouches for gluing or jointing tiles and methods for manufacturing thereof.

### Technical background

Tiling is a well-known operation which mainly consists in covering a wall or a floor with tiles. Most common tiles are square or rectangular in shape but may have sometimes more exotic designs, e.g., triangular, hexagonal or highly irregular shapes.

Tiles are glued onto a wall or a floor with an adhesive tile mortar. An adhesive tile mortar is usually made of a mixture of a mineral hydraulic and/or organic binder, e.g., cements or organic dispersions, mixed with sand, fine-grained aggregates, water and optionally further additives such as flow agents, pore formers, shock / sound absorbing components. Example compositions of adhesive mortars are available in the art.

In the tiling process, the adhesive mortar is traditionally applied manually onto the floor or the wall according to given patterns with a notched trowel. Notched trowels differ from masonry trowels in that they comprise notches that allow to spread the mortar into even lines of identical thickness.

The design of notched trowels has usually two functions. First, the form and the size of notches of the trowels define the amount of delivered mortar onto the surface. A square-notched or U-notched trowel generally delivers more mortar than a V-notched trowel. The choice in size and/or geometry of the notches of the notched trowel depends mainly on the size of tiles to glue.

Second, the space between lines of mortar, also called 'mortar ribs', that are produced by the notches of the trowels allow air to escape when tile is pressed onto the mortar, preventing the formation of air pockets which may, in turn, prevent tiles from lying flat or adhering.

Grout mortar may also be introduced as a binder to joint adjacent tiles. The amount of grout mortar depends on the width of the gaps to fill between adjacent tiles. For both aesthetical and practical reasons, the gaps are often of even and identical width.

During tiling, tile mortars, i.e., adhesive and/or grout mortars, have usually to be prepared on site with a certain mixing ratio between water and each component of the dry ingredients. This mixing requires a certain level of skills to obtain the right consistency and the right pot life and/or setting time for the mortar paste to be correctly applied, and finally the right strengths once the applied mortar is cured.

It is known in the masonry field to use wet or dry pre-mixed mortar pack.

DE 19913613 A1 [SCHORR C-P [DE]] 02.11.2000 describes a masonry mortar pack for assembling bricks in which dry or wet pre-mixed mortar is embedded in a web fabric. Masonry mortar packs are lined onto bricks to form a horizontal bearing joint between rows of bricks.

DE 19959253 A1 [SCHRECK P. [DE]] 13.06.2001 describes a masonry mortar tape for assembling brick in which dry pre-mixed mortar is embedded in a web fabric, both web fabric and **pre-mixed** mortar being wrapped in water soluble layers.

A mortar pouch for gluing or jointing tiles is known from (WO 2004/009514, wherein said pouch encapsulates a dry tile mortar. The pouch has walls that are made of a non-water soluble porous material i.e. a nylon netting, which is coated with a water-soluble adhesive.

### Summary of the invention

### Technical problem

The tiling process requires precision and skills in the application of the tiling mortar onto the surface, in particular, to form the correct pattern in terms of thickness and width of lines of mortar, and in terms of width of the gaps between said lines and/or between adjacent lines.

In this context, the mortar packs available for masonry are not adapted for tiling as they do not allow such precision in the application of the mortar paste.

Preparing, mixing and spreading a tile mortar onto a surface according to given patterns are also time-consuming operations. Further, as the practices vary between operators or workers, the time required for tiling a given surface may also vary, with sometimes irregular quality, e.g., visual appearance, alignment of tiles.

Another drawback of current practice is that large amounts of water are used to clean the tools, e.g., trowels, buckets, mixing mates... Such cleaning operation generates in turn large amounts of waste waters which are most of time not cleansed and/or reused.

There is a need for a solution which increases the tiling productivity by speeding-up the spreading operation of mortar onto surfaces while reducing the water consumption.

Because of required precision and skills, the art of tiling is often a hard learning curve for newcomers in profession or in the field. Further, for non-skilled person tiling may be a rather difficult operation.

Therefore, there is also a need for a solution which eases the learning process for tiling and which may be easily implemented by non-skilled person, in particular, in a Do-It-Yourself (DIY) approach.

### Solution to the technical problem

In a first aspect of the invention, there is provided a mortar pouch for gluing or jointing tiles as described in claim 1, dependant claims being advantageous embodiments.

In a second aspect of the invention, there is provided a tile mortar as described in claim 8, dependant claims being advantageous embodiments.

In a third aspect of the invention, there is provided processes to manufacture a mortar pouch and a tile mortar according to the first and second aspect of the invention.

### Advantages of the invention

A first outstanding advantage of the invention is to ease and speed up the tiling process by providing a ready-to-install dry tile mortar which alleviates the workload, in particular the mixing process and the alignment. The productivity increases and the final quality is more regular between different operators.

A second advantage is that the invention does not require application tools such as mixers for mixing step nor notched trowels. This allows to reduce water consumption as only the quantity of water required to moistens the mortar pouches or the tile mortar according to the invention is needed.

A third advantage is that the mortar pouches or the tile mortar according to the invention may be designed in their shape and size to suit different application, e.g. gluing on a surface or jointing adjacent tiles.

A fourth advantage is that only the needed number of mortar pouches may be used or directly cut out from a tile mortar according to the invention, which in turn allows to reduce mortar wastes.

### Brief description of drawings

Fig. 1 is a schematic orthographic view of a mortar pouch according to a first embodiment.
Fig. 2 is a side cross section view of the mortar pouch of fig. 1.
Fig. 3 is a top section view of the mortar pouch of fig. 1.
Fig. 4 is a schematic orthographic view of a mortar pouch according to a second embodiment.
Fig. 5 is a side cross section view of the mortar pouch of fig. 4.
Fig. 6 is a schematic orthographic view of a mortar pouch according to a third embodiment.
Fig. 7 is a side cross section view of the mortar pouch of fig. 6.
Fig. 8 is a top section view of the mortar pouch of fig. 6.
Fig. 9 is a schematic orthographic view of a tile mortar packaged according to a first embodiment.
Fig. 10 is a side cross section view of the tile mortar of fig. 9.
Fig. 11 is a schematic orthographic view of a tile mortar packaged according to a second embodiment.
Fig. 12 is a side cross section view of the tile mortar of fig. 11.
Fig. 13 is a schematic orthographic view of a tile mortar packaged according to a third embodiment.
Fig. 14 is a side cross section view of the tile mortar of fig. 13.
Fig. 15 is a schematic orthographic view of a tile mortar packaged according to a fourth embodiment.
Fig. 16 is a side cross section view of the tile mortar of fig. 15.
Fig. 17 is a schematic orthographic view of a tile mortar packaged according to a fifth embodiment.
Fig. 18 is a side cross section view of the tile mortar of fig. 17.
Fig. 19 is a schematic orthographic view of jointed tiles with a mortar pouch according to one embodiment.
Fig. 20 is a side cross section view of the tile mortar of fig. 19.

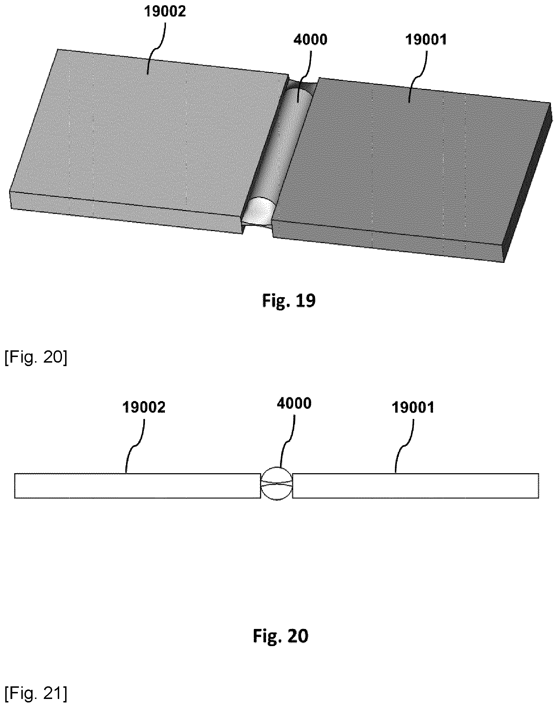

Fig. 20 is a schematic orthographic view of glued and jointed tiles with a mortar pouch and a tile mortar according to another embodiment.

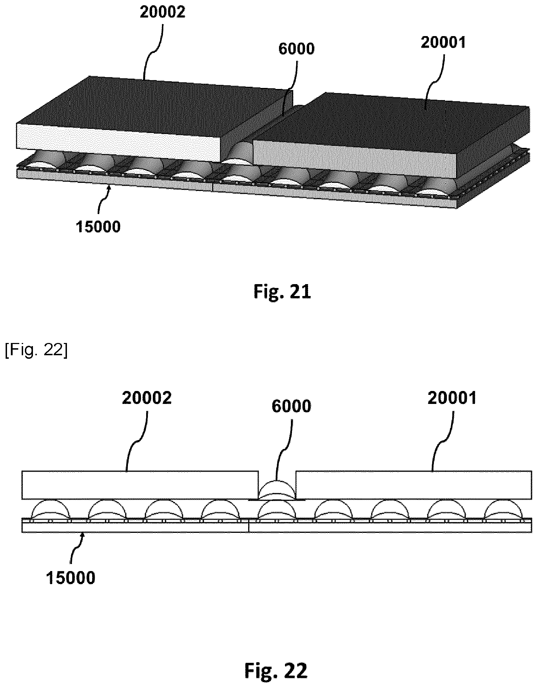

Fig. 21 is a side cross section view of the tile mortar of fig. 19.

### Detailed description of embodiments

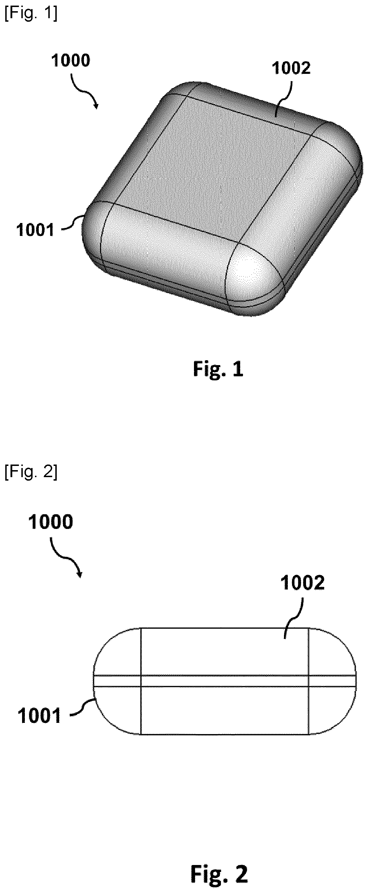

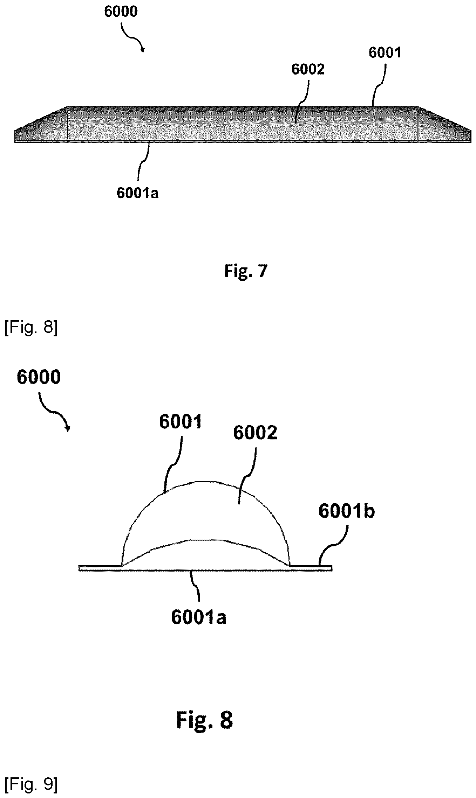

In a first aspect of the invention, with reference to fig. 1 to 8, there is provided a mortar pouch (1000, 4000, 6000) for gluing or jointing tiles, wherein said mortar pouch (1000, 4000, 6000) comprises a water-soluble fabric (1001, 4001, 6001) and a dry tile mortar (1002, 4002, 6002), wherein the water-soluble fabric (1001, 4001, 6001) encapsulates the said dry tile mortar (1002, 4002, 6002) and wherein the said dry tile mortar (1002, 4002, 6002) is not embedded in a non water-soluble fabric.

In the context of the invention, a dry tile mortar may be a dry adhesive mortar or a grout mortar. Further, also in the context of the invention, by 'dry tile mortar', it should be understood as encompassing all kind of binder, either mineral, organic or a mix thereof, which may react with water and may be able to bind tiles onto a surface and/or to be grouted. It may be a mortar as traditionally used or designed in the tiling field, but also other kind of mineral and/or organic water reacting binders.

According to the invention, the water-soluble fabric (1001, 4001, 6001) encapsulates, or wraps, the dry tile mortar (1002, 4002, 6002). The encapsulation retains the dry tile mortar (1002, 4002, 6002) and prevents it from spilling out from the mortar pouch (1000, 4000, 6000).

Also, according to the invention, the dry tile mortar (1002, 4002, 6002) is not embedded in a non water-soluble fabric, such as a non water soluble web, net, thread or mesh. The use of embedding non water soluble fabric is not recommended as they may spoil or degrade the final tile strength of tile mortar. The tiles may also not adhere onto the wall or floor, or may not be jointed correctly to each other. These fabrics may also prevent the tiles from lying flat onto the surfaces.

The mortar pouch (1000, 4000, 6000) according to the invention eases and thus speeds up the tiling process by providing a ready-to-install dry mortar which alleviates the workload and does not require particular technical skills for applying the mortar onto a surface.

In its simplest use, mortar pouches (1000, 4000, 6000) according to the invention may be simply put onto a surface to tile, the surface having been previously wetted, then water be spread over the mortar pouches and the tiles finally placed onto them. The water dissolves the water-soluble fabrics (1001, 4001, 6001) of the mortar pouches (1000, 4000, 6000) and moistens the dry tile mortar (1002, 4002, 6002). There is no need to mix and stir the mortar pouches (1000, 4000, 6000) with water. Each mortar pouch (1000, 4000, 6000) may usually contain only a small quantity of dry tile mortar that suits for the tiling process. The quantity of water to spread may be defined by the nature of dry tile mortar (1002, 4002, 6002) which fills the mortar pouches (1000, 4000, 6000).

For a wall tiling, the mortar pouches (1000, 4000, 6000) may be slightly moistened to allow them to stick onto the wall. Alternatively, or complementarily, the water-soluble fabrics (1001, 4001, 6001) of the mortar pouches (1000, 4000, 6000) may have also a sticking function which allows them to stick firmly on a vertical surface. As an example, the water soluble fabric (1001, 4001, 6001) may be coated with a gluing agent, the gluing property of which may be activated with the spread water.

A mortar pouch (1000, 4000, 6000) according to the invention may have an adhesion strength of at least 0.3 MPa, preferably 0.4 MPa, more preferably 0.5 MPa. The values provide a good adhesion between the tiles and the surface in most jobsite conditions.

In the context of the invention, there is no limitation on the nature of the dry tile mortar (1002, 4002, 6002) with which the mortar pouch (1000, 4000, 6000) is filled. Preferably, the dry tile mortar may have a composition which is compatible with the water-soluble fabric which encapsulates said dry tile mortar.

Example compositions of dry tile mortar are well described in the art. Typically, a dry tile mortar may contain 35-40 wt.% cement, e.g. Portland cement, 33-50 wt.% sand, e.g., silica sand, 12-20 wt.% limestone filler, and 2-5 wt.% redispersible polymer powder. The dry tile mortar may further comprise 0.30-0.40 wt.% cellular ether, and/or 0.5-0.8 wt.% calcium formate. Depending on the application, the dry file mortar may also comprise one or more additives such as starch ether, wetting agents, clays, green binders, calcium alumina cement or sulfoaluminate cement.

Advantageously, the dry tile mortar (1002, 4002, 6002) may comprise additives that captures water and diffuses this water into the mortar pouch (1000, 4000, 6000), e.g., wetting agents, dispersing agents, super-plasticizers.

A mortar pouch (1000, 4000, 6000) according to the invention may be designed and their size adapted to any kind of tiles. Their length, width and/or thickness may be chosen according to the size of the tiles and the desired thickness of mortar to apply on the surface.

As example embodiments, for gluing tiles, a mortar pouch (1000, 4000, 6000) may have preferably several centimetres in length and few millimetres up to few centimetres in thickness. For jointing, a mortar pouch (1000, 4000, 6000) may be preferably narrower with a more elongated shape to fit in the gap between tiles to be jointed. They may have few millimetres in width and few millimetres to few centimetres in thickness and several centimetres in length.

A mortar pouch (1000, 4000, 6000) according to the invention may have any suitable shape for tiling. Advantageously, it may be a pad or a stick.

In a first advantageous example embodiment, with reference to fig. 1 to 3, the mortar pouch (1000) may be square or rectangular pad. This shape simplifies the packaging and provides flexibility for the choice of the number of pouches to use to cover a wall or a floor according to the size of the tiles to glue. For instance, an 4x4 array of 4x4cm square pads, each pad being 1cm spaced from each other, allows to cover the surface of a 20x20cm square tile. The pad may be advantageously small in size so that may provide much more flexibility for adjusting their number depending on the surface to cover.

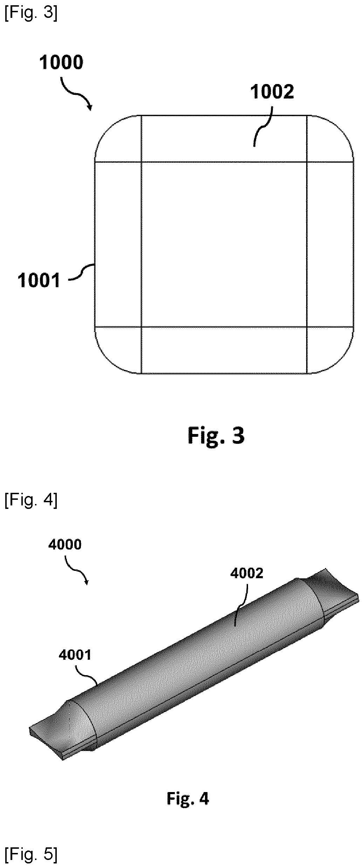

In a second advantageous example embodiment, with reference to fig. 4 to 5, the mortar pouch (4000) may be a stick with a relatively circular section. As pad, this shape also simplifies the packaging. It provides also at least two other advantages. First, it allows to form lines of mortar onto the surface to be tiled, providing the same benefits as the lines of mortar as in the manual tiling process, but with less efforts and without tiling tools. Second, the stick-like shape allow to easily insert the mortar pouch in a gap between adjacent tiles and to be use it for jointing said tiles.

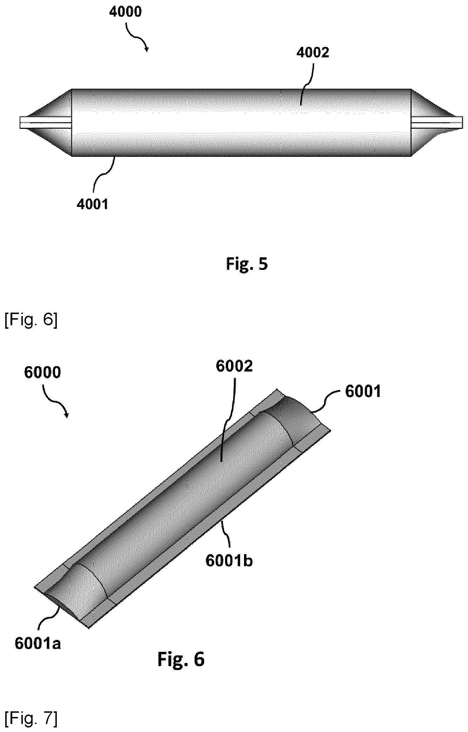

In a third advantageous example embodiment, with reference to fig. 6 to 8, the mortar pouch (6000) may be a stick with a flat side (6001a), e.g., with a semi-circular or Ω-like section. This embodiment may provide the same advantages as the afore described first and second example embodiments, but with the additional benefit that the mortar pouch (6000) being stable on a surface when lying on its flat side. Any sliding or rolling movement over the surface to be tiled is prevented.

In examples embodiments, as stick shaped, the mortar pouches (4000, 6000) may have a diameter between 1mm and 10mm, particularly between 2mm and 5mm, more particularly between 2mm and 3 mm. They may also be 10mm and 1000mm in length, particularly between 10mm and 50mm, more particularly between, 30mm and 60mm.

According to the invention, the embedding or wrapping fabric (1001, 4001, 6001) is water-soluble. Any suitable water-soluble material (1001, 4001, 6001), e.g. water soluble organic polymer, which is compatible with a tile mortar (1002, 4002, 6002) may be used for the fabric.

In certain embodiments, the water soluble fabric may be made of water-soluble polymers having carboxyl group and/or carboxyamide group in the molecule and their salts. Sodium alpha-hydroxy-polyacrylate and homopolymers or copolymers made by using the following monomers as starting material, and/or their salts: (Meth)acrylamide monomers such as acrylamide, N,N-dimethylacrylamide and N-methylacrylamide; (meth)acrylic monomers such as (meth) acrylic acid, sodium (meth) acrylate, potassium (meth)acrylate, lithium (meth)acrylate and 2-hydroxyethyl (or 2-hydroxypropyl) (meth)acrylate; vinyl monomers such as N-vinylpyrrolidone, vinylmethyl ether and styrenesulfonic acid (or sodium or potassium salts thereof), and partial hydrolyzates of poly (meth) acrylamides. In a preferred embodiment, the water soluble fabric is made of polyvinyl alcohol (PVA).

In some embodiments, the water-soluble fabric (1001, 4001, 6001) may comprise water permeable pores. Water permeable pores may be advantageous as they may speed up the dissolving process of water soluble fabric (1001, 4001, 6001) and the moistening of the dry tile mortar (1002, 4002, 6002). In particular, a rapid moistening may be desired if the mortar pouch (1000, 4000, 6000) is filled with a quick set tile mortar.

In particular embodiments, the water soluble fabric (1001, 4001, 6001) may be woven or non-woven fabric. A non-woven fabric may be, for example, a film or the like.

For non-woven fabrics, water permeable pores may be obtained by providing holes in the fabric. For woven fabrics, water permeable pores may be obtained by adjusting the mesh of the fabrics.

One function of the water soluble fabric (1001, 4001, 6001) is to retain the dry tile mortar (1002, 4002, 6002) in the mortar pouch (1000, 4000, 6000). Therefore, the water permeable pores should not be too large to avoid spills or leakages of the dry tile mortar out the mortar pouch (1000, 4000, 6000).

As exemplified in fig 1 to 8, the mortar pouch (1000, 4000, 6000) may be heat sealed. The heat sealing may be performed on sides or on extremities of the mortar pouch (1000, 4000, 6000) to close or enclose the dry tile mortar (1002, 4002, 6002) with the water soluble fabric (1001, 4001, 6001). Heat sealing is preferably performed directly on a water soluble fabric (1001, 4001, 6001) which may be adapted to support heat and be sealed upon heating.

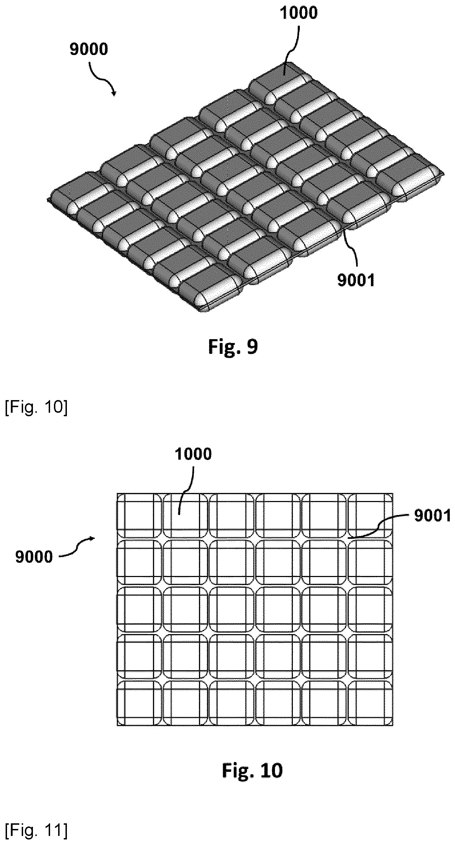

In a second aspect of the invention, with reference to fig. 9 to 12, there is provided a tile mortar (9000,11000) packaged into a plurality of connected individual mortar pouches (1000, 6000) according to any embodiments described above. The tile mortar (9000, 11000) is ready-to-install and its application onto a surface is simplified. The needed number of mortar pouches may be directly cut out from the packaging and directly applied onto the surface of a floor or a wall to be tiled. A subsequent advantage may be a reduction of mortar wastes as only the needed quantity of mortar pouches is used. In more traditional, much more mortar than requested is usually prepared and, once the surface is tiled, the excess is trashed.

As already afore mentioned, no tiling tools are needed to use the mortar pouches according to the invention. This also stands for the tile mortar described above. The consumption of water is reduced as there is no more tiling tools to clean.

In certain embodiments, as exemplified in fig. 9 and 10, the plurality of connected individual mortar pouches (1000, 6000) may be connected to each other by means of a water-soluble supporting fabric (9001). In an advantageous embodiment, the mortar pouches may be directly heat sealed from said water-soluble fabric (9001).

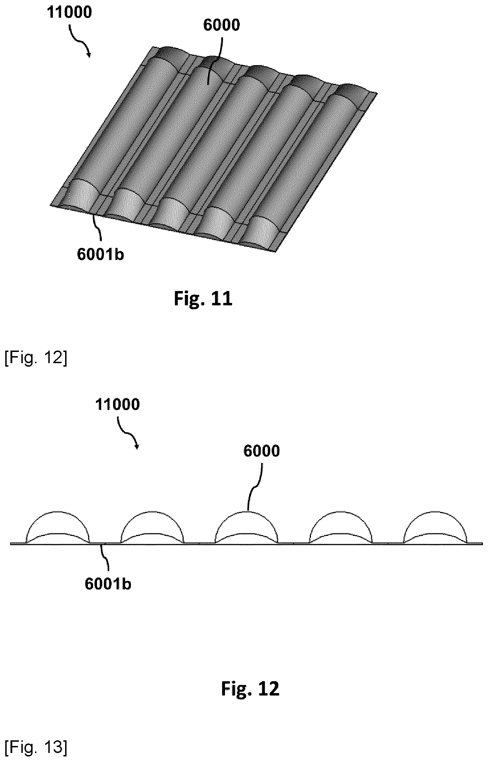

In other embodiments, as exemplified in fig. 11 to 12, the plurality of connected individual mortar pouches (6000) may be connected to each other by means of side flaps (6001b). For instance, side flaps (6001b) may be present in the third example embodiment of a mortar pouch (6000) described previously, wherein the stick may have a semi-circular or Q-like section, and which is exemplified on fig. 6 to 8. The side flaps (6001b) may have different origins. For instance, they may result from a heat sealing of the water soluble fabric (6001) to form the mortar pouch (6000) as described previously.

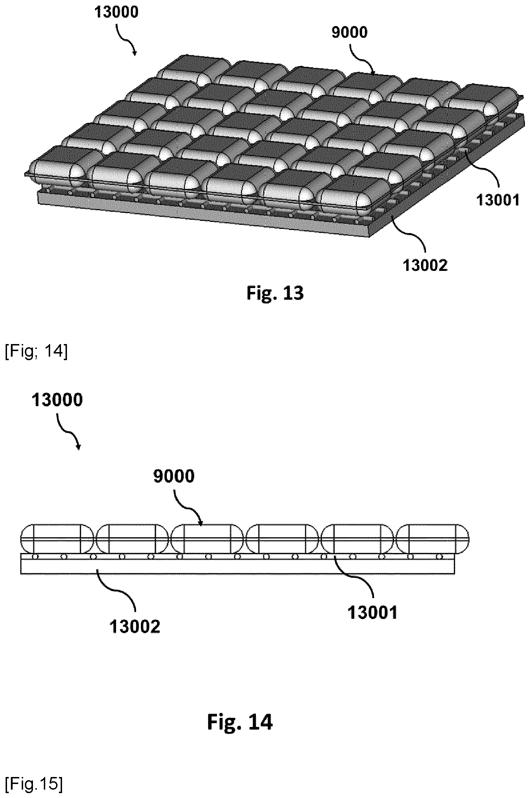

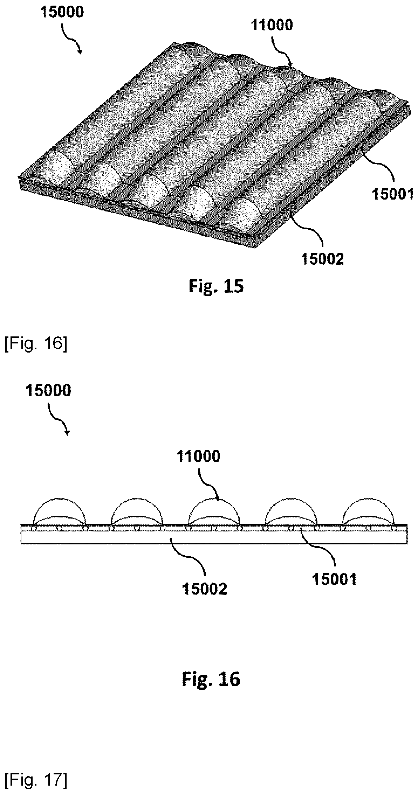

In certain advantageous embodiments, with reference to fig. 13 to 17, the tile mortar (13000, 15000, 17000) may comprise a reinforcing grid (13001, 15001, 17001), preferably a water soluble reinforcing grid, wherein the plurality of connected individual mortar pouches (1000, 4000, 6000) are supported by the reinforcing grid (13001, 15001, 17001). Eventually, the individual mortar pouches (1000, 4000, 6000) may be loosely connected to each other, and a reinforcing grid (13001, 15001, 17001) may help to better handle the packaged tile mortar (13000, 15000, 15000) by providing some rigidity.

A water-soluble reinforcing grid may be advantageous when a reinforcing effect is only desired for handling the tile mortar and not for reinforcing the surface of a wall or a floor. Alternatively, a non-water soluble reinforcing grid may be advantageous when a reinforcing function is desired for both improving the handling of the tile mortar and providing some mechanical strength to the mortar once it is applied onto the surface to be tiled.

Examples of reinforcing grid may be organic grid made of soluble polymers, e.g., polyvinyl alcohol (PVA), or non-soluble organic polymers, e.g., polyethylene (PE), polypropylene (PP). I may be metallic grid made of a metal, e.g. aluminium, or alloys. It may be a composite material comprise organic soluble or non-soluble material and non-organic material, e.g. metal, ceramic, glass fibres. The reinforcing grid may be 3D-printed.

In some embodiments, as exemplified in fig. 13 to 17, the reinforcing grid (13001, 15001, 17001) may be wrapped or covered with a water-soluble fabric (13002, 15002, 17002). The reinforcing grid (13001, 15001, 17001) may then be concealed in the packaged tile mortar (13000, 15000, 17000). Further, the use of a water soluble fabric (13002, 15002, 17002) may also help to handle the tile mortar (13000, 15000, 17000) by providing a smooth and flat surface.

In example embodiments, the tile mortar (13000, 15000, 17000) according to the invention may have size dimensions between 50x50mm and 200x200mm, particularly between 50x50mm and 100x100mm, preferably between 40x40mm and 50x50mm, preferably between 40x40mm and 60×60mm.

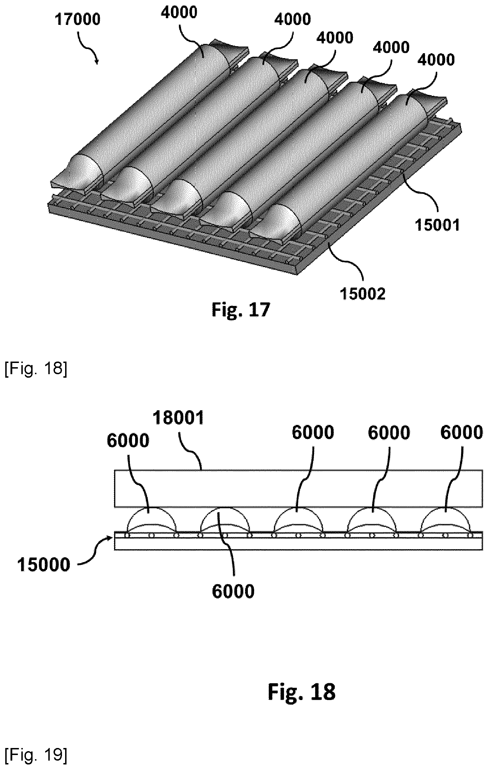

A first application of a tile mortar according to the invention is illustrated on fig. 18. A tile mortar (15000) according to an embodiment is put onto a floor or wall (not represented), and sprayed with the required amount of water. A tile (18001) is then put onto the moistened tile mortar (15000). It is a further advantage of the invention that plurality of mortar pouches (6000), having preferentially same shape and dimension, allow the tile (18001) to lie perfectly flat and levelled. Compared to traditional tiling process, there is no more need to ensure that the lines of mortar are homogeneous in thickness and width. Further, in case of misalignment of a tile, said tile may also be repositioned and/or realigned with minimum efforts and with limited risk of mortar sticking on its down side when removed.

A second example of application of a mortar pouch according to the invention is illustrated on fig. 19 and 20. A stick-like mortar pouch is used to joint two adjacent tiles (19001, 19002). The mortar pouch (4000) is placed between the two adjacent tiles (19001, 19002) before being sprayed with water. The width of the mortar pouch (4000) is adjusted to fit in the desired gap. A benefit is that the gasp is filled without any effort and any tiling tool.

A third example of application of a mortar pouch and a tile mortar according to the invention is illustrated in fig. 20 and 21. A tile mortar (15000) according to an embodiment is put onto a floor or wall (not represented), and sprayed with the required amount of water. Then, two adjacent tiles (20001, 2002) are put onto the moistened tile mortar (1500) and a stick-like mortar pouch (6000) is used to joint two adjacent tiles.

In a third aspect of the invention, there is provided a first process to manufacture a mortar pouch for gluing or jointing tiles, wherein said process comprises the following steps:
(a) providing a water soluble fabric;
(b) bending up said water soluble fabric over one of its sides, preferably over its length, so that to form a hollow shape with a closed section and two open extremities;
(c) sealing the fabric over said side;
(d) sealing a first open extremity;
(e) filling the hollow shape with a dry mortar through the second open extremity;
(f) sealing the second open extremity.

In preferred embodiment, at step (b), the water-soluble fabric is bended up to form a one-flat side, preferably so that to form a hollow shape with a semi-circular or Ω-like section.

There is provided a second process to manufacture a tile mortar, wherein said process comprises the following steps:
(a) providing a plurality of mortar pouches according to any embodiment described herewith;
(b) connecting said mortar pouches to each other by sealing them on a water-soluble supporting fabric, each mortar pouch being preferably oriented in the same direction.

In an alternative embodiment, there is provided a third process to manufacture a tile mortar, wherein said process comprises the following steps:
(a) placing a water-soluble supporting fabric onto a plane support;
(b) placing a plurality of pouch moulds onto said first water soluble fabrics wherein the pouch moulds have the shape adapted to form a hollow cavity for mortar pouches;
(c) compressing and sealing a second water soluble fabrics onto the pouch moulds so that the first and second water soluble fabrics are in contact to each other between the pouch moulds, and to form hollow shapes with closed sections and two open extremities, each hollow shape corresponding to a pouch mould;
(d) removing the pouch moulds;
(e) sealing a first open extremity of all hollow shape, preferably so that the second open extremities of the hollow shapes are all oriented on the same direction;
(e) filling simultaneously or successively the hollow shapes with a dry mortar through their second open extremity;
(f) sealing the second open extremities of the hollow shapes.

This third process may advantageously help to manufacture a tile mortar which is packaged as sticks with a flat side, e.g., with a semi-circular or Ω-like section, as illustrated on fig. 11 and 12.

In certain embodiments of the second and third process to manufacture a tile mortar, the water-soluble supporting fabric may be backed with a reinforcing grid, preferably a water soluble reinforcing grid.

## Claims

1. Mortar pouch (1000, 4000, 6000) for gluing or jointing tiles, wherein said mortar pouch (1000, 4000, 6000) comprises a water-soluble fabric (1001, 4001, 6001) and a dry tile mortar (1002, 4002, 6002), wherein the water-soluble fabric (1001, 4001, 6001) encapsulates the said dry tile mortar (1002, 4002, 6002) and wherein the said dry tile mortar (1002, 4002, 6002) is not embedded in a non water-soluble fabric.

2. Mortar pouch (1000, 4000, 6000) according to claim 1, wherein said mortar pouch is a stick or a pad.

3. Mortar pouch (6000) according to claim 2, wherein said mortar pouch is a stick with a flat side.

4. Mortar pouch (1000, 4000, 6000) according to any of claims 1 to 3, wherein the water-soluble fabric (1001, 4001, 6001) comprises water permeable pores.

5. Mortar pouch (1000, 4000, 6000) according to any of claims 1 to 4, wherein the water-soluble fabric (1001, 4001, 6001) is a woven or non-woven fabric.

6. Mortar pouch (1000, 4000, 6000) according to any of claims 1 to 5, wherein the water-soluble fabric (1001, 4001, 6001) is made of a compound selected from soluble polymers having carboxyl group and/or carboxyamide group in the molecule and their salts; polyvinyl alcohol, sodium alpha-hydroxy-polyacrylate and homopolymers or copolymers made by using the following monomers as starting material, and/or their salts: (Meth)acrylamide monomers such as acrylamide, N,N-dimethylacrylamide and N-methylacrylamide; (meth)acrylic monomers such as (meth) acrylic acid, sodium (meth) acrylate, potassium (meth)acrylate, lithium (meth)acrylate and 2-hydroxyethyl (or 2-hydroxypropyl) (meth)acrylate; vinyl monomers such as N-vinylpyrrolidone, vinylmethyl ether and styrenesulfonic acid (or sodium or potassium salts thereof), and partial hydrolyzates of poly (meth) acrylamides.

7. Mortar pouch (1000, 4000, 6000) according to any of claims 1 to 6, wherein said mortar pouch (1000, 4000, 6000) is heat sealed.

8. Tile mortar (9000, 11000) packaged into a plurality of connected individual mortar pouches (1000, 4000, 6000) according to any of claim 1 to 7.

9. Tile mortar (9000, 11000) according to claim 8, wherein said plurality of connected individual mortar pouches (1000, 4000, 6000) are connected to each other by means of water-soluble supporting fabric.

10. Tile mortar (13000, 15000, 17000) according to any of claims 8 to 9, wherein the said tile mortar (13000, 15000, 17000) comprises a reinforcing grid (13001, 15001, 17001), preferably a water soluble reinforcing grid, and wherein said plurality of connected individual mortar pouches (1000, 4000, 6000) are supported by the reinforcing grid (13001, 15001, 17001).

11. Process to manufacture a mortar pouch (1000, 4000, 6000) for gluing or jointing tiles as defined in any one of claims 1 to 7, wherein said process comprises the following steps:
(a) providing a water soluble fabric;
(b) bending up said water soluble fabric over one of its sides, preferably over its length, so that to form a hollow shape with a closed section and two open extremities;
(c) sealing the fabric over said side;
(d) sealing a first open extremity;
(e) filling the hollow shape with a dry tile mortar through the second open extremity;
(f) sealing the second open extremity.

12. Process to manufacture a mortar pouch (6000) according to claim 11, wherein, at step (b), the water-soluble fabric is bended up to form a one-flat side, preferably so that to form a hollow shape with a semi-circular or Ω-like section.

13. Process to manufacture a tile mortar (9000, 11000) as defined in any one of claims 8 to 10, wherein said process comprises the following steps:
(a) providing a plurality of mortar pouches according (1000, 4000, 6000) to any of claims 1 to 7;
(b) connecting said mortar pouches (1000, 4000, 6000) to each other by sealing them on a water-soluble supporting fabric, each mortar pouch (1000, 4000, 6000) being preferably oriented in the same direction.

14. Process to manufacture a tile mortar (9000, 11000) as defined in any one of claims 8 to 10, wherein said process comprises the following steps:
(a) placing a water-soluble supporting fabric onto a plane support;
(b) placing a plurality of pouch moulds onto said first water soluble fabrics wherein the pouch moulds have the shape adapted to form a hollow cavity of mortar pouches;
(c) compressing a second water soluble fabrics onto the pouch moulds so that the first and second water soluble fabrics are in contact to each other between the pouch moulds, and to form hollow shapes with closed sections and two open extremities, each hollow shape corresponding to a pouch mould;
(d) removing the pouch moulds;
(e) sealing a first open extremity of all hollow shape, preferably so that the second open extremities of the hollow shapes are all oriented on the same direction;
(e) filling simultaneously or successively the hollow shapes with a dry mortar through their second open extremity;
(f) sealing the second open extremities of the hollow shapes.

15. Process according to any of claims 13 to 14, wherein the water-soluble supporting fabric is backed with a reinforcing grid, preferably a water soluble reinforcing grid.

## Patentansprüche

1. Mörtelbeutel (1000, 4000, 6000) zum Verkleben oder Fugen von Fliesen, wobei der Mörtelbeutel (1000, 4000, 6000) ein wasserlösliches Gewebe (1001, 4001, 6001) und einen trockenen Fliesenmörtel (1002, 4002, 6002) umfasst, wobei das wasserlösliche Gewebe (1001, 4001, 6001) den trockenen Fliesenmörtel (1002, 4002, 6002) einkapselt und wobei der trockene Fliesenmörtel (1002, 4002, 6002) nicht in ein nicht wasserlösliches Gewebe eingebettet ist.

2. Mörtelbeutel (1000, 4000, 6000) nach Anspruch 1, wobei der Mörtelbeutel ein Stab oder ein Kissen ist.

3. Mörtelbeutel (6000) nach Anspruch 2, wobei der Mörtelbeutel ein Stab mit einer flachen Seite ist.

4. Mörtelbeutel (1000, 4000, 6000) nach einem der Ansprüche 1 bis 3, wobei das wasserlösliche Gewebe (1001, 4001, 6001) wasserdurchlässige Poren aufweist.

5. Mörtelbeutel (1000, 4000, 6000) nach einem der Ansprüche 1 bis 4, wobei der wasserlösliche Stoff (1001, 4001, 6001) ein gewebter oder nicht gewebter Stoff ist.

6. Mörtelbeutel (1000, 4000, 6000) nach einem der Ansprüche 1 bis 5, wobei das wasserlösliche Gewebe (1001, 4001, 6001) aus einer Verbindung hergestellt ist, die ausgewählt ist aus löslichen Polymeren mit Carboxylgruppen und/oder Carboxyamidgruppen im Molekül und deren Salzen; Polyvinylalkohol, Natriumalpha-hydroxy-polyacrylat und Homopolymeren oder Copolymeren, die unter Verwendung der folgenden Monomere als Ausgangsmaterial und/oder deren Salzen hergestellt werden: (Meth)acrylamid-Monomere wie Acrylamid, N,N-Dimethylacrylamid und N-Methylacrylamid; (Meth)acrylmonomere wie (Meth)acrylsäure, Natrium(meth)acrylat, Kalium(meth)acrylat, Lithium(meth)acrylat und 2-Hydroxyethyl (oder 2-Hydroxypropyl)(meth)acrylat; Vinylmonomere wie N-Vinylpyrrolidon, Vinylmethylether und Styrolsulfonsäure (oder Natrium- oder Kaliumsalze davon) sowie partielle Hydrolysate von Poly(meth)acrylamiden.

7. Mörtelbeutel (1000, 4000, 6000) nach einem der Ansprüche 1 bis 6, wobei der Mörtelbeutel (1000, 4000, 6000) heißgesiegelt ist.

8. Fliesenmörtel (9000, 11000), verpackt in einer Vielzahl von verbundenen einzelnen Mörtelbeuteln (1000, 4000, 6000) nach einem der Ansprüche 1 bis 7.

9. Fliesenmörtel (9000, 11000) nach Anspruch 8, wobei die Vielzahl von verbundenen einzelnen Mörtelbeutel (1000, 4000, 6000) mittels eines wasserlöslichen Trägergewebes miteinander verbunden sind.

10. Fliesenmörtel (13000, 15000, 17000) nach einem der Ansprüche 8 bis 9, wobei der Fliesenmörtel (13000, 15000, 17000) ein Verstärkungsgitter (13001, 15001, 17001), vorzugsweise ein wasserlösliches Verstärkungsgitter, umfasst und wobei die Vielzahl von verbundenen einzelnen Mörtelbeuteln (1000, 4000, 6000) durch das Verstärkungsgitter (13001, 15001, 17001) getragen wird.

11. Verfahren zum Herstellen eines Mörtelbeutel (1000, 4000, 6000) zum Verkleben oder Fugen von Fliesen nach einem der Ansprüche 1 bis 7, wobei das Verfahren die folgenden Schritte umfasst:
(a) Bereitstellen eines wasserlöslichen Gewebes;
(b) Hochbiegen des wasserlöslichen Gewebes über eine seiner Seiten, vorzugsweise über seine Länge, um eine Hohlform mit einem geschlossenen Abschnitt und zwei offenen Enden zu bilden;
(c) Versiegeln des Gewebes über die Seite;
(d) Versiegeln eines ersten offenen Endes;
(e) Füllen der Hohlform mit einem trockenen Fliesenmörtel durch das zweite offene Ende;
(f) Versiegeln des zweiten offenen Endes.

12. Verfahren zur Herstellung eines Mörtelbeutels (6000) nach Anspruch 11, wobei in Schritt (b) das wasserlösliche Gewebe hochgebogen wird, um eine flache Seite zu bilden, vorzugsweise so, dass eine Hohlform mit einem halbkreisförmigen oder Ω-ähnlichen Querschnitt entsteht.

13. Verfahren zur Herstellung eines Fliesenmörtels (9000, 11000) nach einem der Ansprüche 8 bis 10, wobei das Verfahren die folgenden Schritte umfasst:
(a) Bereitstellen einer Vielzahl von Mörtelbeuteln (1000, 4000, 6000) nach einem der Ansprüche 1 bis 7;
(b) Verbinden der Mörtelbeutel (1000, 4000, 6000) miteinander durch Versiegeln dieser auf einem wasserlöslichen Trägergewebe, wobei jeder Mörtelbeutel (1000, 4000, 6000) vorzugsweise in dieselbe Richtung ausgerichtet ist.

14. Verfahren zur Herstellung eines Fliesenmörtels (9000, 11000) nach einem der Ansprüche 8 bis 10, wobei das Verfahren die folgenden Schritte umfasst:
(a) Auflegen eines wasserlöslichen Trägergewebes auf eine ebene Trägerfläche;
(b) Auflegen einer Vielzahl von Beutelformen auf das erste wasserlösliche Gewebe, wobei die Beutelformen eine Form aufweisen, die zum Bilden eines Hohlraums von Mörtelbeuteln geeignet ist;
(c) Komprimieren eines zweiten wasserlöslichen Geweben auf die Beutelformen, so dass das erste und das zweite wasserlösliche Gewebe zwischen den Beutelformen miteinander in Kontakt sind, und um Hohlformen mit geschlossenen Abschnitten und zwei offenen Enden zu bilden, wobei jede Hohlform einer Beutelform entspricht;
(d) Entfernen der Beutelformen;
(e) Versiegeln eines ersten offenen Endes aller Hohlformen, vorzugsweise so, dass die zweiten offenen Enden der Hohlformen alle in die gleiche Richtung ausgerichtet sind;
(e) gleichzeitiges oder aufeinanderfolgendes Füllen der Hohlformen mit einem Trockenmörtel durch ihr zweites offenes Ende;
(f) Versiegeln der zweiten offenen Enden der Hohlformen.

15. Verfahren nach einem der Ansprüche 13 bis 14, wobei das wasserlösliche Trägergewebe mit einem Verstärkungsgitter, vorzugsweise einem wasserlöslichen Verstärkungsgitter, hinterlegt ist.

## Revendications

1. Poche à mortier (1000, 4000, 6000) permettant de coller ou de joindre des carreaux, dans laquelle ladite poche à mortier (1000, 4000, 6000) comprend un tissu hydrosoluble (1001, 4001, 6001) et un mortier sec pour carreaux (1002, 4002, 6002), dans laquelle le tissu hydrosoluble (1001, 4001, 6001) encapsule ledit mortier sec pour carreaux (1002, 4002, 6002) et dans laquelle ledit mortier sec pour carreaux (1002, 4002, 6002) n'est pas incorporé dans un tissu non hydrosoluble.

2. Poche à mortier (1000, 4000, 6000) selon la revendication 1, dans laquelle ladite poche à mortier est un bâton ou un bloc.

3. Poche à mortier (6000) selon la revendication 2, dans laquelle ladite poche à mortier est un bâton avec un côté plat.

4. Poche à mortier (1000, 4000, 6000) selon l'une quelconque des revendications 1 à 3, dans laquelle le tissu hydrosoluble (1001, 4001, 6001) comprend des pores perméables à l'eau.

5. Poche à mortier (1000, 4000, 6000) selon l'une quelconque des revendications 1 à 4, dans laquelle le tissu hydrosoluble (1001, 4001, 6001) est un tissu tissé ou non tissé.

6. Poche à mortier (1000, 4000, 6000) selon l'une quelconque des revendications 1 à 5, dans laquelle le tissu hydrosoluble (1001, 4001, 6001) est constitué d'un composé choisi parmi des polymères solubles ayant un groupe carboxyle et/ou un groupe carboxyamide dans la molécule et leurs sels ; l'alcool polyvinylique, l'alpha-hydroxy-polyacrylate de sodium et des homopolymères ou copolymères obtenus en utilisant les monomères suivants comme matière de départ, et/ou leurs sels : monomères de (méth)acrylamide tels que l'acrylamide, le N,N-diméthylacrylamide et le N-méthylacrylamide ; monomères (méth)acryliques tels que l'acide (méth)acrylique, le (méth)acrylate de sodium, le (méth)acrylate de potassium, le (méth)acrylate de lithium et le (méth)acrylate de 2-hydroxyéthyle (ou de 2-hydroxypropyle) ; monomères vinyliques tels que la N-vinylpyrrolidone, l'éther vinylméthylique et l'acide styrénesulfonique (ou sels de sodium ou de potassium de ceux-ci), et hydrolysats partiels de poly(méth)acrylamides.

7. Poche à mortier (1000, 4000, 6000) selon l'une quelconque des revendications 1 à 6, dans laquelle ladite poche à mortier (1000, 4000, 6000) est scellée à chaud.

8. Mortier pour carreaux (9000, 11000) conditionné en une pluralité de poches à mortier (1000, 4000, 6000) individuelles reliées selon l'une quelconque des revendications 1 à 7.

9. Mortier pour carreaux (9000, 11000) selon la revendication 8, dans lequel ladite pluralité de poches de mortier (1000, 4000, 6000) individuelles reliées sont reliées les unes aux autres au moyen d'un tissu de support hydrosoluble.

10. Mortier pour carreaux (13000, 15000, 17000) selon l'une quelconque des revendications 8 à 9, dans lequel ledit mortier pour carreaux (13000, 15000, 17000) comprend une grille de renforcement (13001, 15001, 17001), de préférence une grille de renforcement hydrosoluble, et dans lequel ladite pluralité de poches de mortier (1000, 4000, 6000) individuelles reliées sont supportées par la grille de renforcement (13001, 15001, 17001).

11. Procédé de fabrication d'une poche à mortier (1000, 4000, 6000) permettant de coller ou de joindre des carreaux selon l'une quelconque des revendications 1 à 7, dans lequel ledit procédé comprend les étapes suivantes :
(a) la fourniture d'un tissu hydrosoluble ;
(b) le pliage dudit tissu hydrosoluble sur l'un de ses côtés, de préférence sur sa longueur, de manière à former une forme creuse avec une section fermée et deux extrémités ouvertes ;
(c) le scellement du tissu sur ledit côté ;
(d) le scellement d'une première extrémité ouverte ;
(e) le remplissage de la forme creuse avec un mortier sec pour carreaux à travers la seconde extrémité ouverte ;
(f) le scellement de la seconde extrémité ouverte.

12. Procédé de fabrication d'une poche à mortier (6000) selon la revendication 11, dans lequel, à l'étape (b), le tissu hydrosoluble est replié pour former un côté plat, de préférence de manière à former une forme creuse avec une section semi-circulaire ou de type Ω.

13. Procédé de fabrication d'un mortier pour carreaux (9000, 11000) selon l'une quelconque des revendications 8 à 10, dans lequel ledit procédé comprend les étapes suivantes :
(a) la fourniture d'une pluralité de poches à mortier (1000, 4000, 6000) selon l'une quelconque des revendications 1 à 7 ;
(b) la liaison desdites poches à mortier (1000, 4000, 6000) les unes aux autres en les scellant sur un tissu de support hydrosoluble, chaque poche à mortier (1000, 4000, 6000) étant de préférence orientée dans la même direction.

14. Procédé de fabrication d'un mortier pour carreaux (9000, 11000) selon l'une quelconque des revendications 8 à 10, dans lequel ledit procédé comprend les étapes suivantes :
(a) le placement d'un tissu de support hydrosoluble sur un support plan ;
(b) le placement d'une pluralité de moules de poches sur lesdits premiers tissus hydrosolubles, dans lequel les moules de poches ont la forme adaptée pour former une cavité creuse de poches de mortier ;
(c) la compression d'un seconds tissus hydrosolubles sur les moules de poches de sorte que les premiers et seconds tissus hydrosolubles sont en contact les uns avec les autres entre les moules de poches, et pour former des formes creuses avec des sections fermées et deux extrémités ouvertes, chaque forme creuse correspondant à un moule de poche ;
(d) le retrait des moules de poches ;
(e) le scellement d'une première extrémité ouverte de toutes les formes creuses, de préférence de sorte que les secondes extrémités ouvertes des formes creuses sont toutes orientées dans la même direction ;
(e) le remplissage simultané ou successif des formes creuses avec un mortier sec par leur seconde extrémité ouverte ;
(f) le scellement des secondes extrémités ouvertes des formes creuses.

15. Procédé selon l'une quelconque des revendications 13 à 14, dans lequel le tissu de support hydrosoluble est doublé d'une grille de renforcement, de préférence une grille de renforcement hydrosoluble.
